# EUROPÄISCHE PATENTSCHRIFT

(11) **EP 2 571 667 B1**
(45) Veröffentlichungstag und Bekanntmachung des Hinweises auf die Patenterteilung: **11.09.2019**
(21) Anmeldenummer: 11709621.4
(22) Anmeldetag: 04.03.2011
(51) Int. Cl.: B29C 45/36

(54) **VORRICHTUNG ZUR HERSTELLUNG EINER PIPETTE**
DEVICE FOR PRODUCING A PIPETTE
DISPOSITIF DE FABRICATION D'UNE PIPETTE

(30) Priorität: 21.05.2010 CH 803102010
(43) Veröffentlichungstag der Anmeldung: 27.03.2013
(73) Patentinhaber: Schöttli AG, 8253 Diessenhofen (CH)
(72) Erfinder: SCHÖTTLI, Martin, CH-8254 Basadingen (CH)
(74) Vertreter: Vossius, Corinna
(86) Internationale Anmeldenummer: PCT/CH2011/000041
(87) Internationale Veröffentlichungsnummer: WO 2011/143784

(56) Entgegenhaltungen:
- EP-A1- 2 078 600
- EP-A2- 0 076 980
- US-A1- 2008 179 792
- US-B1- 6 284 160

## Beschreibung

Gegenstand der Erfindung ist eine Vorrichtung zur Herstellung einer Pipette.

Bei der Herstellung von dünnwandigen langgestreckten Körpern, wie insbesondere Pipetten oder Tips, besteht das Problem, dass durch Formversatz und Toleranzen im Werkzeug keine rotationssymmetrischen Teile hergestellt werden. Dies bedeutet, dass beim automatischen Pipettieren die Austrittsöffnung für die zu pipettierende Flüssigkeit nicht an der vorgesehenen Stelle liegt. Solche unsymmetrischen Pipetten können zu Problemen führen bzw. sie stellen Ausschuss dar. Die europäische Patentanmeldung Nr. 0 076 980 beschreibt eine Mehrfachspritzgießform für Vorformlinge (preforms), bei der an der düsenseitigen, in der Spritzgießmaschine feststehenden Platte jeweils Außenformen in separaten Gehäusen angeordnet sind, die stirnseitig gegen die feststehende Platte verschraubt sind. Jeder Außenform ist ein unabhängiges Formbackenpaar zugeordnet, das jeweils in einer gesonderten Führung gelagert ist, die sich quer zur Öffnungsrichtung der Spritzgießform erstreckt.

Die US Patentschrift Nr. 6 284 160 B1 beschreibt eine Vorrichtung zur Herstellung einer Glasfaser-Zwinge mittels Spritztechnik, die die Verwendung von einstellbaren Kern- und Aufnahmeelementen einschließt, um sowohl einen Kernstift als auch ein hervorstehendes Dichtelement in einer Gießform präzise anzuordnen.

Die US Patentanmeldung Nr. 2008/0179792 A1 beschreibt eine Gießform zur Herstellung einer Kanüle und ein Gießformverfahren mittels der/dessen es möglich, ist eine glatte bzw. gleichmäßige Fläche zu gießen.

Eine Aufgabe der vorliegenden Erfindung besteht nun darin, eine Vorrichtung zu schaffen, welche die Herstellung von dünnwandigen langgezogenen Körpern ermöglicht, deren Wandstärke konstant ist, d.h. deren Spitze nach der Fertigung auf der geometrischen Symmetrieachse des Körpers liegt. Eine weitere Aufgabe der Erfindung besteht darin, die Vorrichtung derart auszubilden, dass festgestellte Abweichungen auf einfache Art und Weise direkt im Spritzgusswerkzeug korrigiert werden können.

Gelöst wird diese Aufgabe durch eine Vorrichtung gemäss den Merkmalen des Patentanspruchs 1. Vorteilhafte Ausgestaltungen der Vorrichtung sind in den abhängigen Ansprüchen umschrieben.

Es gelingt durch die exzentrische Ausbildung der ineinander greifenden Exzenterbuchse und der Abstreifhülse, diese derart miteinander zu verbinden, dass durch eine einfache Drehbewegung eines der beiden Elemente die Lage des Kerns ausgerichtet werden kann.

Anhand eines illustrierten Ausführungsbeispiels wird die Erfindung näher erläutert. Es zeigen
- Figur 1: eine perspektivische Darstellung eines dünnwandigen langgestreckten Körpers anhand einer Pipette,
- Figur 2: einen Querschnitt durch ein Spritzwerkzeug für eine Pipette,
- Figur 3: eine perspektivische Darstellung des Kerns des Werkzeugs,
- Figur 4: eine perspektivische Darstellung einer Abstreifhülse,
- Figur 5a: eine perspektivische Darstellung einer Buchse,
- Figur 5b: eine Darstellung der Buchse aus einem anderen Winkel,
- Figur 6: eine ausschnittsweise Darstellung der ersten Formhälften-Ausstosserseite und
- Figur 7: eine perspektivische Darstellung einer Halteplatte.

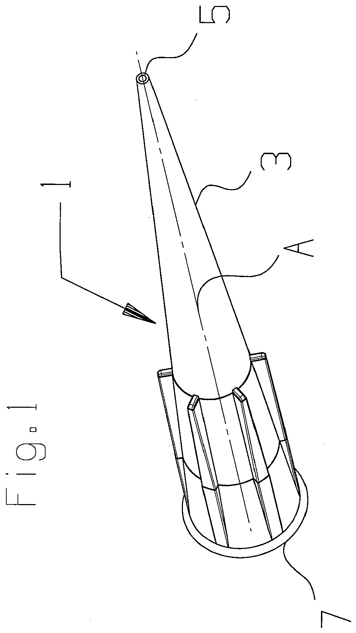

Als dünnwandiger langgestreckter Körper ist in Figur 1 mit Bezugszeichen 1 eine Pipette bezeichnet. Diese ist auf der rechten Seite konisch zulaufend, d.h. als hohler, spitzwinkliger Kegelstumpf 3 ausgebildet. Das vordere Ende hat beispielsweise einen Durchmesser von 0,75 mm und eine Ausgiessöffnung 5 von 0,45 mm. Mit anderen Worten, die Wandstärke (Dicke der Wand) ist nur 0,15 mm. Auf der linken Seite ist am Kegelstumpf 3 ein Flansch 7 ersichtlich, welcher dazu bestimmt ist, die Pipette 1 an bzw. mit einem Pipettiergerät zu verbinden. Statt einer konisch verlaufenden Pipette 1 könnte selbstverständlich auch ein Körper mit zylindrischem Mantel treten.

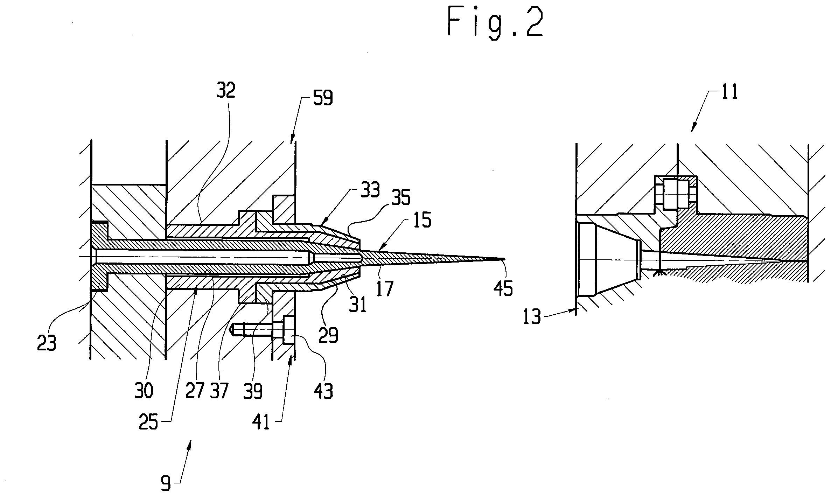

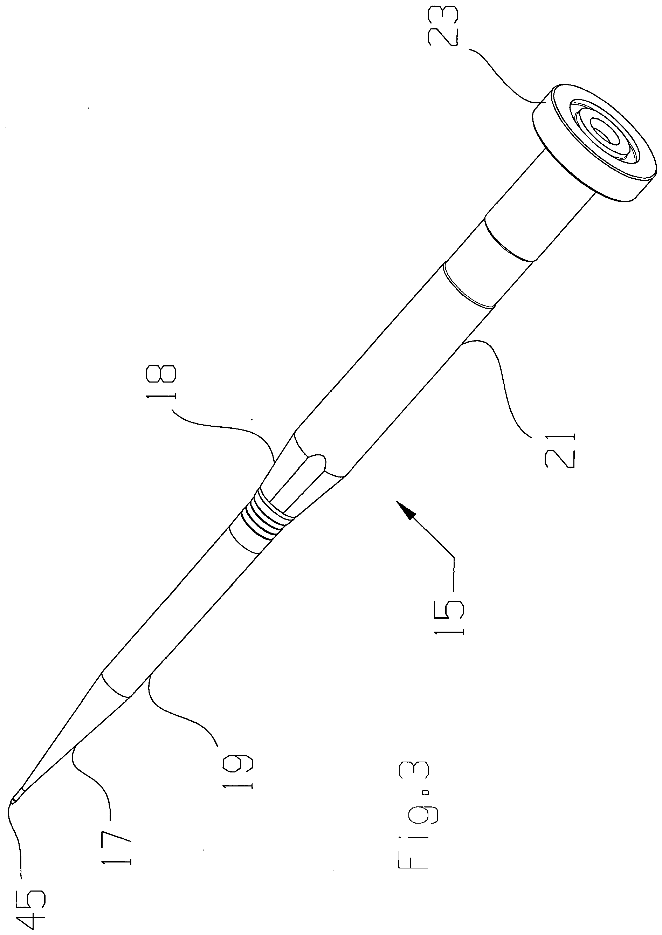

In Figur 2 ist auf der linken Seite die erste Formhälfte (Ausstosserseite) der Spritzgiessform 9, kurz Formhälfte 9, und auf der rechten Seite die zweite Formhälfte (Düsenseite) der Spritzgiessform 11, kurz Formhälfte 11, ausschnittsweise dargestellt. Die zweite Formhälfte 11 beinhaltet die Matrize 13, welche die Aussenkontur der Pipette 1, d.h. des Werkstücks, bildet. Die erste Formhälfte 9 (links) trägt den Kern 15, der die Innenkontur der Pipette 1 bildet und mehrere Einzelteile umfasst. Der formgebende Teil, d.h. der Kern 15, ist in Figur 3 vergrösset wiedergegeben. Dieser umfasst oben eine Spitze 45 und anschliessend einen spitzen Kegelstumpf 17, welcher den Innenraum des spitz zulaufenden Bereichs der Pipette 1 bildet. An diesen schliesst hinten ein zylindrischer oder konischer Bereich 19 an, der den hinteren Bereich der Pipette 1 formt. Der in Figur 3 unten liegende Abschnitt 21 endet in einem Flansch 23, mit welchem der Kern 15 an der ersten Formhälfte 9 des Werkzeugs befestigt wird. Der Kern 15 wird von einer Abstreifhülse 25 umgeben.

Die Abstreifhülse 25 weist eine axialsymmetrische Bohrung 27 auf, deren Durchmesser im rückwertigen Teil einen Durchmesser aufweist, der grösser ist als der Aussendurchmesser des Kerns 15. Im vorderen Teil ist die Bohrung 27 konisch verlaufend und liegt am konischen Bereich hinten bei 18 des Kerns 15 im Wesentlichen spielfrei an. Der Kern 15 ist folglich einerseits durch den Flansch 23 am Abschnitt 21 mit der Formhälfte 9 verbunden und in seinem konischen Bereich hinten bei 18 über die Abstreifhülse 25 spielfrei gehalten. Der Mantel 29 der Abstreifhülse 25 ist nicht axialsymmetrisch ausgebildet, sondern weist eine Exzentrizität auf, die beispielsweise 0,08 mm betragen kann. Die Exzentrizität umfasst den zylindrischen Abschnitt der Abstreifhülse 25 sowie den konisch verlaufenden Abschnitt. Auf dem Vorderteil der Abstreifhülse 25 sitzt eine Exzenterbuchse, kurz Buchse 33 genannt, deren Bohrung 31 kongruent zum Mantel 29 der Abstreifhülse 25 ausgebildet ist. Die Bohrung 31 der Buchse 33 ist ebenfalls exzentrisch zur Mantelfläche 35 der Buchse 33 ausgeführt, d.h. die Mantelfläche 35 liegt symmetrisch zur Symmetrieachse der Buchse 33; die Bohrung 31 liegt exzentrisch zur Symmetrieachse A. Die Buchse 33 ist mit ihrem hinteren Ende 39, das flanschartig ausgebildet ist, auf einem umlaufenden flanschartigen Steg 37 an der Abstreifhülse 25 axial abgestützt. Der zylindrische Sockel 30 der Abstreifhülse 25 ist in der ersten Formhälfte 9 in eine zylindrische Aufnahmebohrung 32 einschiebbar. Die Abstreifhülse 25 und die Buchse 33 sind gegeneinander durch eine Halteplatte 41, welche auf der Formhälfte 9 aufliegt, aufeinander und gegen gegenseitige Verdrehung gesichert. Die Halteplatte 41 wird durch mindestens eine Schraube 43 gehalten.

Durch die exzentrische Ausbildung des Mantels 29 auf der Abstreifhülse 25 und die exzentrische Ausbildung der Bohrung 31 in der Buchse 33 kann durch gegenseitige Verdrehung von Abstreifhülse 25 und Buchse 33 die Lage des Kerns 15 in einem vorgebbaren um einen vorgebbaren Bereich radial ausgelenkt und gleichzeitig die Winkelausrichtung der radialen Auslenkung festgelegt werden. Mit anderen Worten, der konische Bereich hinten bei 18 des Kerns 15 wird durch die Abstreifhülse 25 und die Buchse 33 aus der Symmetrieachse A ausgelenkt.

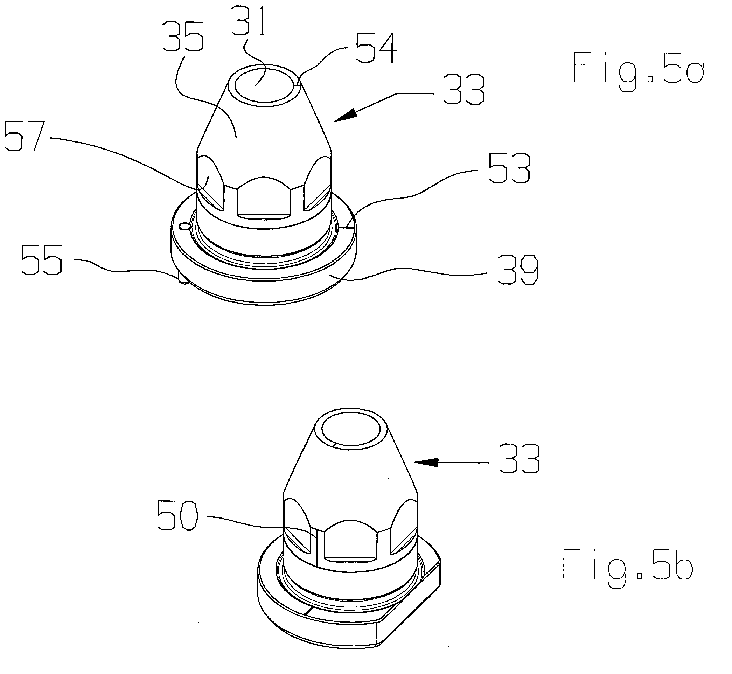

Auf der Oberfläche 47 des flanschartigen Stegs 37 an der Abstreifhülse 25 sind Markierungen 49 angebracht, z.B. in Gestalt von Kalotten oder Rillen. Diese Markierungen 49 können mit Nummern versehen sein, um eine Identifikation zu ermöglichen. Alternativ zu Kalotten können auch ganz oder teilweise durchgehende Bohrungen als Markierungen vorgesehen sein. Weiter ist auf der Peripherie des umlaufenden Steges 37 bei "O" eine Markierung 51 eingelassen oder aufgebracht. Eine weitere Markierung 52 ist an der breitesten Stelle der Stirnfläche angebracht. An der Buchse 33 (Figur 5) ist auf der Oberseite des flanschartigen hinteren Endes 39 ebenfalls eine Markierung 53 eingelassen oder aufgebracht. Zwischen den Schlüsselflächen 57 der Buchse 33 ist eine weitere Markierung 50 angebracht. Sie ist mit der Markierung 53 an der Buchse 33 in der gleichen Flucht angeordnet. Eine weitere Markierung 54 ist an der breitesten Stelle des stirnseitigen Endes angebracht. Weiter ist an der Unterseite ein Stift 55 eingesetzt, der dazu bestimmt und geeignet ist, in die Markierungen 49 an der Abstreifhülse 25 einzugreifen bzw. einzurasten, um die eingestellte Winkeldrehlage zwischen der Abstreifhülse 25 und der Buchse 33 festzulegen. Weiter ist an der Buchse 33 die Möglichkeit geschaffen, einen Gabelschlüssel anzusetzen. Dazu sind am Umfang Schlüsselflächen 57 analog einer Sechskantmutter angebracht.

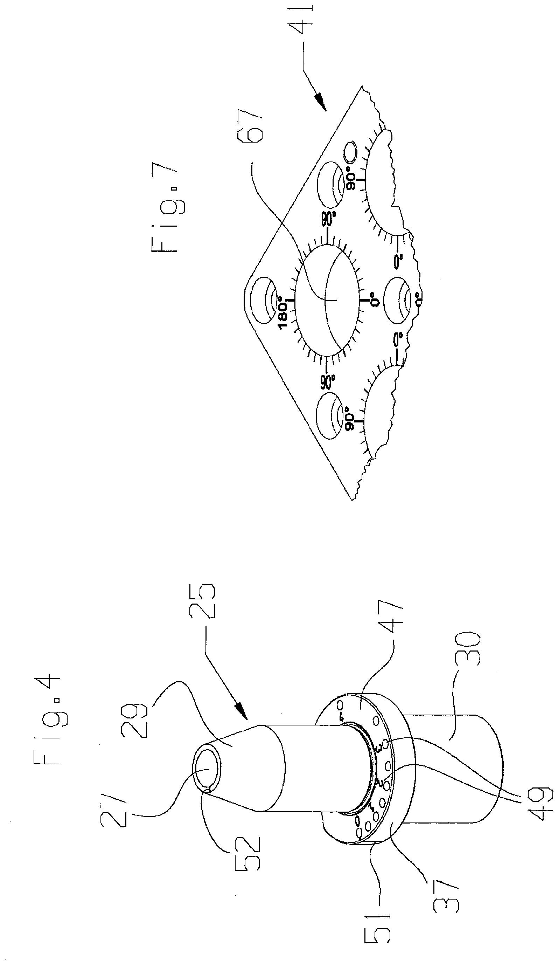

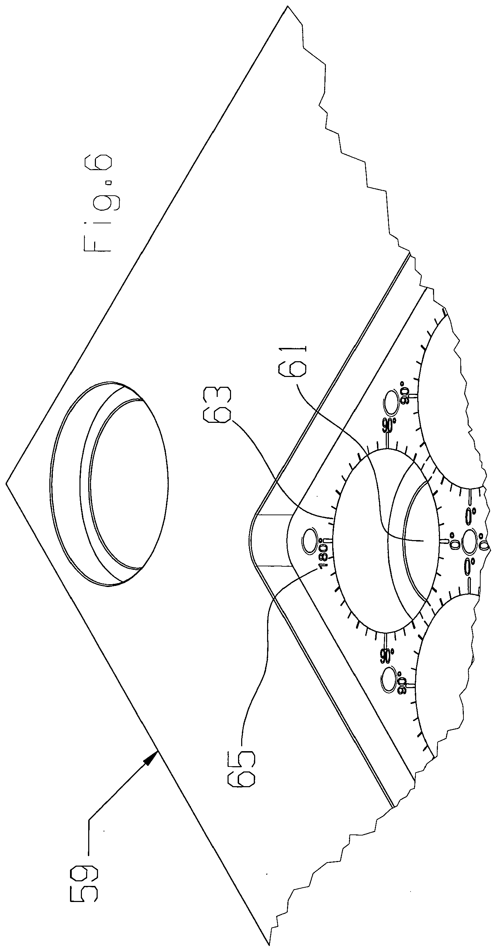

In den Figuren 6 und 7 sind perspektivische Aufsichten auf die Halteplatte 41 (Figur 7) sowie auf die Formplatte (Ausstosserseite) 59. In der Formplatte 59 sind Aufnahmebohrungen 61 ausgebildet, in welche die Abstreifhülsen 25 axial einschiebbar sind. Auf den Rändern 63 der Aufnahmebohrungen 61 sind Skalen von jeweils +180° und -180° eingraviert. Diese Skalen 65 dienen dazu, die Abstreifhülse 25 bei der Montage zu positionieren und bei einer Lagekorrektur die neue Lage festzulegen.

Auf der Halteplatte 41 (Figur 7) sind wiederum Löcher 67 ausgebildet, die mit den Aufnahmebohrungen 61 der Formplatte 59 fluchten und ebenfalls auf deren Peripherie Markierungen von+/- 180° eingezeichnet sind.

Bei der Montage des Kerns 15 in der Formhälfte 9 werden die Abstreifhülse 25 und die Buchse 33 derart ineinander montiert, dass der Kern 15 eine aus Erfahrung bekannte Auslenkung/Biegung erfährt. Stellt man nun jedoch fest, dass entweder der Betrag der Auslenkung des Spritzlings, hier der Pipette 1, vom Sollwert abweicht oder/und dessen Winkellage vom Sollwert abweicht, so kann bei geöffneter Spritzgussform (Formhälften 9 und 11 beabstandet wie in Figur 2) die Schraube 43 gelöst und die Halteplatte 41 demontiert und die gegenseitige Lage der Abstreifhülse 25 und der Buchse 33 sowie die Winkellage der beiden Elemente 25, 33 zur Formplatte AS 59 justiert werden. Die Justierung kann anhand einer aus Versuchen abgeleiteten Tabelle erfolgen. Eine solche Neujustierung eines Kerns 15, kann innerhalb weniger Minuten vorgenommen werden und es muss die Spritzgussform nicht aus der Spritzgussmaschine ausgebaut werden, um dies zu tun.

## Patentansprüche

1. Vorrichtung zur Herstellung einer Pipette in einer Spritzgießmaschine, umfassend:
eine Spritzgussform mit einer ersten Formhälfte (9), die einen Kern (15) aufnimmt und einer zweiten Formhälfte (11), die eine Matrize (13) aufnimmt, wobei die Position des Kerns (15) bezüglich der Matrize (13) ein- und verstellbar ist, wobei
der Kern (15) an einem Ende einen Flansch (23) zur Befestigung an der ersten Formhälfte (9) aufweist, einen sich von dem Flansch (23) erstreckenden zylindrischen Abschnitt (21), einen sich davon erstreckenden konischen Abschnitt (18), einen sich davon erstreckenden zylindrischen oder konischen Abschnitt (19) und einen sich davon erstreckenden spitzen Kegelstumpf (17) mit einer Spitze (45) formt, wobei der spitze Kegelstumpf (17) den Innenraum des spitz zulaufenden Bereiches der Pipette bildet;
eine Abstreifhülse (25), die einen zylindrischen und einen konischen Abschnitt umfasst, und die den zylindrischen und den konischen Abschnitt (21; 18) des Kerns (15) umgibt,
wobei die Abstreifhülse (25) eine axialsymmetrische Bohrung (27) aufweist, die im rückwertigen Teil einen Durchmesser aufweist, der grösser ist als ein Außendurchmesser des Kerns (15) und die im vorderen Teil konisch verläuft und am konischen Bereich (18) des Kerns (15) im Wesentlichen spielfrei anliegt, und
wobei die Abstreifhülse (25) einen Mantel (29) aufweist, der zu einer Symmetrieachse A des Kerns (15) exzentrisch ausgebildet ist, wobei die Exzentrizität den zylindrischen und den konischen Abschnitt der Abstreifhülse (25) umfasst; und
eine auf ein Vorderteil der Abstreifhülse (25) aufsteckbare und zur Abstreifhülse (25) drehbare Buchse (33), wobei die Buchse (33) ein flanschartiges hinteres Ende (39) umfasst, das ein umlaufender Steg (37) der Abstreifhülse (25) axial abstützt,
wobei die Buchse (33) eine Bohrung (31) aufweist, die kongruent zum Mantel (29) der Abstreifhülse (25) und exzentrisch zu einer Mantelfläche (35) der Buchse (33) ausgebildet ist.

2. Vorrichtung nach Anspruch 1, **dadurch gekennzeichnet, dass** auf einer Oberfläche (47) des flanschartigen umlaufenden Stegs (37) der Abstreifhülse (25) eine mindestens teilweise umlaufende Skala und eine Markierung (51) ausgebildet sind.

3. Vorrichtung nach Anspruch 2, **dadurch gekennzeichnet, dass** auf der Oberseite des flanschartigen hinteren Endes (39) der Buchse (33) eine mindestens teilweise umlaufende Skala und/oder eine Markierung (50; 53) ausgebildet sind.

4. Vorrichtung nach einem der Ansprüche 2 oder 3, **dadurch gekennzeichnet, dass** auf ringförmigen Stirnflächen des flanschartigen Stegs (37) der Abstreifhülse (25) und des flanschartigen hinteren Endes (39) der Buchse (33) an der jeweils breitesten Stelle der Stirnfläche Markierungen (52; 54) aufgebracht sind.

5. Vorrichtung nach einem der Ansprüche 3 bis 4, **dadurch gekennzeichnet, dass** die Abstreifhülse (25) einen zylindrischen Sockel (30) aufweist, der in einer zylindrischen Aufnahmebohrung (32) an der ersten Formhälfte (9) einschiebbar ist, derart, dass die Abstreifhülse (25) zusammen mit der Buchse (33) als Ganzes zur Positionierung darin dreh- und mit einer Halteplatte (41) an der ersten Formhälfte (9) festklemmbar ist.

6. Vorrichtung nach einem der Ansprüche 1 bis 5, **dadurch gekennzeichnet, dass** die Abstreifhülse (25) und die Buchse (33) relativ zueinander drehbar sind, derart dass die Lage des Kern (15) durch die Abstreifhülse (25) in radialer Richtung auslenkbar und/oder bezüglich der Winkellage zur Form ein- und verstellbar ist.

7. Vorrichtung nach Anspruch 6, **dadurch gekennzeichnet, dass** der Betrag der Auslenkung und/oder der Winkellage anhand von durch Versuche festgelegten Tabellen ein- und verstellbar ist.

## Claims

1. Device for producing a pipette in an injection moulding machine, comprising:
an injection mould having a first mould half (9), which receives a core (15), and a second mould half (11), which receives a die (13), wherein the position of the core (15) in relation to the die (13) can be set and adjusted, wherein
the core (15) has a flange (23) on one end for fixing to the first mould half (9), forms a cylindrical section (21) extending from the flange (23), a conical section (18) extending therefrom, a cylindrical or conical section (19) extending therefrom and a pointed truncated cone (17) extending therefrom having a point (45), wherein the pointed truncated cone (17) forms the inner space of the tapering region of the pipette;
a stripping sleeve (25), which comprises a cylindrical and a conical section, and which surrounds the cylindrical and the conical section (21; 18) of the core (15),
wherein the stripping sleeve (25) has an axially symmetrical bore (27), which, in the rear part, has a diameter that is greater than an outer diameter of the core (15) and which runs conically in the front part and abuts on the conical region (18) of the core (15) substantially without play, and
wherein the stripping sleeve (25) has a cover (29) which is formed eccentrically to an axis of symmetry A of the core (15), wherein the eccentricity comprises the cylindrical and the conical section of the stripping sleeve (25); and
a bushing (33) that can be plugged onto a front part of the stripping sleeve (25) and can be rotated in relation to the stripping sleeve (25), wherein the bushing (33) comprises a flange-like back end (39) that axially supports a circumferential web (37) of the stripping sleeve (25),
wherein the bushing (33) has a bore (31), which is formed congruently to the cover (29) of the stripping sleeve (25) and eccentrically to a cover surface (35) of the bushing (33).

2. Device according to claim 1, **characterised in that** an at least partially circumferential scale and a marking (51) are formed on a surface (47) of the flange-like circumferential web (37) of the stripping sleeve (25).

3. Device according to claim 2, **characterised in that** an at least partially circumferential scale and/or a marking (50; 53) are formed on the upper side of the flange-like back end (39) of the bushing (33).

4. Device according to one of claims 2 or 3, **characterised in that** markings (52; 54) are applied to the annular end faces of the flange-like web (37) of the stripping sleeve (25) and the flange-like rear end (39) of the bushing (33) on the respectively widest point of the end face.

5. Device according to one of claims 3 to 4, **characterised in that** the stripping sleeve (25) has a cylindrical base (30) that can be inserted in a cylindrical receiving bore (32) on the first mould half (9) in such a way that the stripping sleeve (25) can be clamped together with the bushing (33) as a whole for positioning therein rotatably and with a holding plate (41) to the first mould half (9).

6. Device according to one of claims 1 to 5, **characterised in that** the stripping sleeve (25) and the bushing (33) can be rotated in relation to one another in such a way that the position of the core (15) can be deflected by the stripping sleeve (25) in the radial direction and/or can be set or adjusted in terms of the angular position in relation to the mould.

7. Device according to claim 6, **characterised in that** the extent of the deflection and/or the size of the angular position can be set or adjusted by means of tables determined by experiments.

## Revendications

1. Dispositif pour la fabrication d'une pipette dans une machine de moulage par injection, comprenant :
un moule à injection comportant une première moitié (9) destinée à recevoir un noyau (15), et une deuxième moitié (11) destinée à recevoir une matrice (13), la position du noyau (15) étant réglable et ajustable par rapport à la matrice (13),
le noyau (15) comportant à une extrémité une bride (23) pour sa fixation à la première moitié de moule (9), et formant une section cylindrique (21) s'étendant à partir de la bride (23), puis une section conique (18) s'étendant à partir de là, puis une section cylindrique ou conique (19) s'étendant à partir de là et enfin un cône tronqué (17) s'étendant à partir de là, doté d'une pointe (45), le cône tronqué pointu (17) formant la cavité intérieure de la zone de la pipette finissant en pointe ;
un manchon amovible (25) comportant une section cylindrique et une section conique et qui entoure les sections cylindrique et conique (21;18) du noyau (15),
le manchon amovible (25) présentant un alésage axial symétrique (27) dont la partie arrière a un diamètre supérieur à un diamètre extérieur du noyau (15) et la partie avant a une forme conique et est en contact avec la partie conique (18) du noyau (15) sensiblement sans jeu, et
le manchon amovible (25) possédant une gaine (29) de forme excentrique par rapport à l'axe de symétrie A du noyau (15), l'excentricité englobant la section cylindrique et la section conique du manchon amovible (25) ; et
une douille (33) pouvant se fixer sur une partie antérieure du manchon amovible (25) et pivoter par rapport au manchon amovible (25), la douille (33) comportant une extrémité postérieure (39) en forme de bride qui est soutenue axialement par un rebord (37) pratiqué sur la périphérie du manchon amovible (25),
la douille (33) comportant un alésage (31) congruent à la gaine (29) du manchon amovible (25) et excentrique par rapport à une surface de la gaine (35) de la douille (33).

2. Dispositif selon la revendication 1, **caractérisé en ce que** sur une surface (47) du rebord périphérique (37) en forme de bride du manchon amovible (25) sont pratiquées une échelle en faisant au moins partiellement le tour et une marque (51).

3. Dispositif selon la revendication 2, **caractérisé en ce que** sur la partie supérieure de l'extrémité postérieure (39) en forme de bride de la douille (33) sont pratiquées une échelle en faisant au moins partiellement le tour et/ou une marque (50;53).

4. Dispositif selon une des revendications 2 ou 3, **caractérisé en ce que** des marques (52;54) sont apposées sur les faces frontales circulaires du rebord (37) en forme de bride du manchon amovible (25) et de l'extrémité postérieure (39) en forme de bride de la douille (33), dans chaque cas sur la partie la plus large de la face frontale.

5. Dispositif selon une des revendications 3 à 4, **caractérisé en ce que** le manchon amovible (25) est doté d'un socle cylindrique (30) qui peut être engagé dans un alésage de réception cylindrique (32) dans la première moitié de moule (9), de telle sorte que le manchon amovible (25) solidairement avec la douille (33) puisse s'y positionner par rotation comme un ensemble et être serré par une plaque de maintien (41) sur la première moitié de moule (9).

6. Dispositif selon une des revendications 1 à 5, **caractérisé en ce que** le manchon amovible (25) et la douille (33) peuvent être tournés l'un par rapport à l'autre de sorte que la position du noyau (15) peut être déviée en direction radiale par le manchon amovible (25) et/ou la position angulaire par rapport au moule être réglée et ajustée.

7. Dispositif selon la revendication 6, **caractérisé en ce que** la grandeur de la déviation et/ou la position angulaire sont réglées et ajustées à l'aide de tableaux établis sur la base d'essais.
